# EUROPÄISCHE PATENTANMELDUNG

(11) **EP 1 908 525 A1**
(43) Veröffentlichungstag der Anmeldung: **09.04.2008**
(21) Anmeldenummer: 06025713.6
(22) Anmeldetag: 12.12.2006
(51) Int. Cl.: B02C 21/02, B02C 23/40

(54) **Mobile Vorrichtung zum Recyclen von Abfällen bei der Produktion von Autoreifen**

(30) Priorität: 04.10.2006 DE 102006046932
(71) Anmelder: Linde Aktiengesellschaft, 65189 Wiesbaden (DE)
(72) Erfinder: Rebhahn, Dieter, 82538 Geretsried-Gelting (DE)

(57) **Zusammenfassung**

Es wird eine mobile Vorrichtung zur Behandlung bei der Produktion von Reifen, insbesondere der Produktion von Autoreifen, anfallenden, nicht vulkanisierten Abfällen, wie beispielsweise Cordabschnitten, grünen Reifen, etc., beschrieben; diese weist
a) wenigstens einen Shredder, der der kalten und/oder warmen Vorzerkleinerung der Abfallprodukte dient,
b) wenigstens einen Kühler, der der Unterkühlung des Shredder-Gutes dient,
c) wenigstens eine Kaltmahlanlage, die dem Aufschluss und der Trennung des Shredder-Gutes dient, und
d) wenigstens eine Sieb- und Sichteranlage, die wenigstens zur Trennung der Komponenten Stahl, Cord und Kautschuk ausgebildet ist, auf.

Erfindungsgemäß sind die vorgenannten Komponenten so dimensioniert, dass sie auf einem Lkw, einem Lkw- und/oder einem Bahnanhänger, vorzugsweise in einem Standard-Container, -Rahmen und/oder -Gestell, transportierbar sind.

## Beschreibung

Die Erfindung betrifft eine mobile Vorrichtung zur Behandlung bei der Produktion von Reifen, insbesondere der Produktion von Autoreifen, anfallenden, nicht vulkanisierten Abfällen, wie beispielsweise Cordabschnitten, grünen Reifen, etc. aufweisend
a) wenigstens einen Shredder, der der kalten und/oder warmen Vorzerkleinerung der Abfallprodukte dient,
b) wenigstens einen Kühler, der der Unterkühlung des Shredder-Gutes dient,
c) wenigstens eine Kaltmahlanlage, die dem Aufschluss und der Trennung des Shredder-Gutes dient, und
d) wenigstens eine Sieb- und Sichteranlage, die wenigstens zur Trennung der Komponenten Stahl, Cord und Kautschuk ausgebildet ist.

Unter dem Begriff "kalte und/oder warme Vorzerkleinerung" sei hierbei ein Prozess zu verstehen, bei dem die Abfallprodukte im Wesentlichen auf Zentimetergröße bis etwa Handtellergröße zerkleinert werden, wobei insbesondere Shredder, die nach dem Schneid- oder Hammerprinzip arbeiten, zur Anwendung kommen.

Bei der Produktion von Gummireifen für Pkw, Lkw, etc. fallen am Produktionsort nicht vulkanisierte Abfälle, insbesondere Cordabschnitte und sog. grüne Reifen an. Unter dem Begriff "grüne Reifen" werden üblicherweise vorkonfektionierte, noch nicht vulkanisierte Reifen verstanden. Diese Abfälle werden bisher entweder deponiert oder in Heizungsanlagen von Kraftwerken, Zementwerken, etc. der Verbrennung zugeführt.

Grundsätzlich sind Reifenhersteller jedoch daran interessiert, die anfallenden unterschiedlichen Abfallstoffe zu trennen und soweit als möglich erneut zu verwerten. Hierbei ist jedoch insbesondere die Sortenreinheit ein entscheidendes Kriterium. Dies zeigt sich beispielsweise darin, dass Reifenhersteller ihre Abfallstoffe zum Zweck des Recycelns ungern außer Haus geben, da dabei nicht zweifelsfrei sichergestellt werden kann, dass die zurückkehrenden, für die Wiederverwertung bestimmten recyclierten Stoffe bzw. Materialien tatsächlich aus der eigenen Produktion stammen und in unverschmutzter Form vorliegen.

Aufgabe der vorliegenden Erfindung ist es, eine gattungsgemäße mobile Vorrichtung zur Behandlung bei der Produktion von Reifen anfallenden, nicht vulkanisierten Abfällen anzugeben, die die vorgenannten Nachteile vermeidet.

Zur Lösung dieser Aufgabe wird eine gattungsgemäße Vorrichtung vorgeschlagen, die dadurch gekennzeichnet ist, dass ihre vorgenannten Komponenten (Merkmale a) bis d)) so dimensioniert sind, dass sie auf einem Lkw, einem Lkw- und/oder einem Bahnanhänger, vorzugsweise in einem Standard-Container, -Gestell und/oder -Rahmen, transportierbar sind.

Der Kern der vorliegenden Erfindung besteht nunmehr darin, eine mobile Anlage bzw. ein mobiles Verfahren zu schaffen, die bzw. das eine Trennung der bei der Produktion von Gummireifen anfallenden Abfallstoffe vor Ort - vorzugsweise unmittelbar auf dem Betriebsgelände des Reifenproduzenten - ermöglicht. Dadurch wird erreicht, dass der Reifenproduzent sicher sein kann, dass ausschließlich seine Abfallstoffe verwertet und eine Verunreinigung mit Fremdabfällen ausgeschlossen werden kann. Darüber hinaus muss die erfindungsgemäße mobile Vorrichtung von dem Reifenproduzenten nur dann angefordert werden, wenn sich eine ausreichend große Abfallmenge, die eine Trennung sinnvoll erscheinen lässt, angesammelt hat.

Das Trennen und Bearbeiten der bei der Reifenproduktion anfallenden Abfallstoffe kann somit in Form eines Dienstleistungsrecyclings - ähnlich einem mobilen Aktenvernichter - angeboten und realisiert werden.

Weitere vorteilhafte Ausgestaltungen der erfindungsgemäßen mobilen Vorrichtung zur Behandlung bei der Produktion von Reifen anfallenden, nicht vulkanisierten Abfällen, sind dadurch gekennzeichnet, dass
- die mobile Vorrichtung Mittel zum Nachbearbeiten des Stahl- und/oder des Textilcordgewölles aufweist,
- dem oder den Shreddern eine Flüssig-Stickstoff-Versorgungseinheit zugeordnet ist und
- die mobile Vorrichtung Mittel zum Kaltvermahlen aufweist, wobei diese Mittel zum Kaltvermahlen vorzugsweise als Schneid-, Hammer- und/oder Reibmühle ausgebildet sind.

Hierbei dienen die vorgenannten Mittel zum Kaltvermahlen dem abschließenden Komponentenaufschluss.

Das Vorsehen von Mitteln zum Nachbearbeiten des Stahl- und/oder des Textilcordgewölles macht insbesondere dann Sinn, wenn diese Wertstoffe einer Weiterverarbeitung, beispielsweise in ein Stahlwerk, zugeführt und im Rahmen der gewählten Weiterverarbeitung dosiert werden müssen.

Die ggf. vorzusehende Flüssig-Stickstoff-Versorgungseinheit wird im Regelfall als ein (thermisch isolierter) Flüssig-Stickstoff-Speicherbehälter ausgebildet sein, wobei dessen Fassungsvermögen zwischen ca. 3.000 und 50.000 Liter Flüssigstickstoff beträgt.

Die erfindungsgemäße mobile Vorrichtung zur Behandlung bei der Produktion von Reifen anfallenden, nicht vulkanisierten Abfällen schafft eine Recycling-Möglichkeit, die aufgrund der Tatsache, dass mit ihr die zum Stand der Technik zählenden Probleme vermieden werden können, von den Reifenproduzenten akzeptiert werden kann. Neben der Gewissheit, unmittelbar vor Ort eine sortenreine Trennung und Aufarbeitung der Abfallstoffe realisieren zu haben, werden darüber hinaus bisher bestehende Transport- und Lagerprobleme des Reifenproduzents wesentlich reduziert.

## Patentansprüche

1. Mobile Vorrichtung zur Behandlung bei der Produktion von Reifen, insbesondere der Produktion von Autoreifen, anfallenden, nicht vulkanisierten Abfällen, wie beispielsweise Cordabschnitten, grünen Reifen, etc., aufweisend
a) wenigstens einen Shredder, der der kalten und/oder warmen Vorzerkleinerung der Abfallprodukte dient,
b) wenigstens einen Kühler, der der Unterkühlung des Shredder-Gutes dient,
c) wenigstens eine Kaltmahlanlage, die dem Aufschluss und der Trennung des Shredder-Gutes dient, und
d) wenigstens eine Sieb- und Sichteranlage, die wenigstens zur Trennung der Komponenten Stahl, Cord und Kautschuk ausgebildet ist,
**dadurch gekennzeichnet**, das die vorgenannten Komponenten so dimensioniert sind, dass sie auf einem Lkw, einem Lkw- und/oder einem Bahnanhänger, vorzugsweise in einem Standard-Container, -Rahmen und/oder -Gestell, transportierbar sind.

2. Vorrichtung nach Anspruch 1, **dadurch gekennzeichnet, dass** sie Mittel zum Nachbearbeiten des Stahl- und/oder des Textilcordgewölles aufweist.

3. Vorrichtung nach Anspruch 1 oder 2, **dadurch gekennzeichnet, dass** dem oder den Shreddern eine Flüssig-Stickstoff-Versorgungseinheit zugeordnet ist.

4. Vorrichtung nach einem der vorhergehenden Ansprüche 1 bis 3, **dadurch gekennzeichnet, dass** sie Mittel zum Kaltvermahlen aufweist.

5. Vorrichtung nach Anspruch 4, **dadurch gekennzeichnet, dass** die Mittel zum Kaltvermahlen als Schneid-, Hammer- und/oder Reibmühle ausgebildet sind.
